# EUROPEAN PATENT APPLICATION

(11) **EP 4 756 404 A1**
(43) Date of publication of application: **10.06.2026**
(21) Application number: 25220329.4
(22) Date of filing: 03.12.2025
(51) Int. Cl.: G01N 11/16, B01F 27/80, B01F 35/21, G01N 29/032, G01N 29/22

(54) **VISCOMETER, INDUSTRIAL PROCESS CONTROL SYSTEM WITH IN-LINE VISCOMETER, AND METHOD OF VISCOSITY MEASUREMENT**

(30) Priority: 04.12.2024 IN 202411095720
(71) Applicant: Schneider Electric Systems USA, Inc., Foxborough, MA 02035 (US)
(72) Inventor: POLENI, Ravi, 500092 Telangana (IN); KALE, Shripad Janardan, 411021 Maharashtra (IN)
(74) Representative: Openshaw & Co.

(57) **Abstract**

A viscometer (110) for measuring viscosity of a fluid uses one or more ultrasound transducers (116, 118) to conduct an ultrasound-based time-of-flight measurement process in which an ultrasound pulse is transmitted into the fluid at a first time and received by a transducer at a second time. A viscometer enclosure (114) has at least one transducer receptacle (146, 148) configured for being immersed in the fluid. The at least one transducer receptacle (146, 148) receives one or more ultrasound transducers (116, 118) and fluidly isolates the transducer(s) (116, 118) from the fluid. The viscometer enclosure (114) is shaped and arranged so that, when the ultrasound-based time-of-flight measurement process is conducted, the ultrasound pulse travels a predefined distance through the fluid from where the ultrasound pulse is transmitted to where the ultrasound pulse is received, whereby a time of flight of the ultrasound pulse from when the ultrasound pulse is transmitted to when the ultrasound pulse is received indicates the viscosity of the fluid.

## Description

### FIELD

This disclosure generally pertains to a viscometer, more specifically, to a viscometer that measures liquid viscosity using ultrasound, and to an industrial process control system and a method of viscosity measurement employing such a viscometer.

### BACKGROUND

In certain industrial processes, it is necessary to control the viscosity of process fluids. Conventional methods for viscosity measurement typically involve extracting fluid samples at regular intervals for laboratory analysis. This off-line sampling method is time-consuming, introduces the risk of sample contamination, and often delays the feedback required for real-time process adjustments. The labor-intensive nature of sampling and analysis not only increases operational costs but can also lead to product variability due to the lag between the measurement and the process adjustments. Consequently, there is a growing need for in-line viscosity measurement solutions that can continuously monitor fluid viscosity in real-time within the production environment. Although several types of in-line viscometers are available, existing commercially viable products do not meet the demanding requirements of all industrial applications.

Further, there is an ongoing need for improvement in viscosity measurement that extends to off-line instruments as well. Conventional off-line viscometers require frequent cleaning and recalibration. Reducing the maintenance requirements for all types of viscometers, both in-line and off-line, is of interest.

### SUMMARY

In one aspect, an in-line viscometer for measuring viscosity of a process fluid contained in a process vessel comprises a viscometer enclosure comprising a base configured to be mounted on the process vessel. The viscometer enclosure further comprises first and second transducer receptacles extending from the base such that the first and second transducer receptacles are configured to be received in the process fluid when the base is mounted on the process vessel. The first transducer receptacle comprises a first channel wall and the second transducer receptacle comprising a second channel wall spaced apart from the first channel wall in opposing relation therewith. The first and second channel walls define a measurement channel therebetween. The viscometer enclosure is shaped and arranged to receive the process fluid in the measurement channel when the base is mounted on the process vessel. A first ultrasound transducer is received in the first transducer receptacle and configured to transmit ultrasound through the measurement channel to the second transducer receptacle. A second ultrasound transducer is received in the second transducer receptacle and configured to receive the ultrasound transmitted by the first ultrasound transducer through the measurement channel and output a measurement signal indicating the viscosity of the process fluid.

In another aspect, an industrial process control system comprises a process vessel for containing a process fluid flowing within the process vessel. The process vessel comprises a vessel wall defining a process opening. A process control device is selectively actuatable to adjust a characteristic of the process fluid. An in-line viscometer is mounted on vessel wall at the process opening. The in-line viscometer comprises a viscometer enclosure and first and second ultrasound transducers in the viscometer enclosure. The first ultrasound transducer is configured to transmit ultrasound through the process fluid to the second ultrasound transducer. The second ultrasound transducer is configured to detect the ultrasound transmitted from the first ultrasound transducer through the process fluid and output a measurement signal indicating the viscosity of the process fluid. The viscometer enclosure is configured to fluidly isolate the first and second ultrasonic transducers from the process fluid. A controller is configured to receive the measurement signal from the in-line viscometer and actuate the process control device based on the measurement signal.

In an example, the process control device, is one of a mixer, an agitator, a heater, a chiller, a pump, a valve, a compressor, or a dryer.

In an example, the viscometer enclosure comprises a base mounted on the vessel wall and first and second transducer receptacles projecting from the base at spaced apart locations.

In an example, the first and second transducer receptacles define a measurement channel therebetween, the channel having an inlet, an outlet, and a flow axis extending from the inlet to the outlet, the viscometer enclosure mounted on the vessel wall such that the flow axis extends parallel to a process fluid flow direction within the process vessel adjacent the process opening.

In an example, the first transducer receptacle comprises a first channel wall, the second transducer receptacle comprises a second channel wall opposite the first channel wall, the first ultrasound transducer is received in the first transducer receptacle against the first channel wall, and the second ultrasound transducer is received in the second transducer receptacle against the second channel wall.

In an example, the process vessel is a reactor vessel and wherein the process control device comprises an agitator in the reactor vessel.

In another aspect, a viscometer for measuring viscosity of a fluid comprises one or more ultrasound transducers configured to conduct an ultrasound-based time-of-flight measurement process in which said one or more ultrasound transducers transmit an ultrasound pulse into the fluid at a first time and receive the ultrasound pulse at a second time. A viscometer enclosure comprises at least one transducer receptacle configured for being immersed in the fluid. The at least one transducer receptacle receives said one or more ultrasound transducers and fluidly isolates said one or more ultrasound transducers from the fluid when the at least one transducer receptacle is immersed in the fluid. The viscometer enclosure is shaped and arranged so that, when said one or more ultrasound transducers received in the at least one transducer receptacle conduct the ultrasound-based time-of-flight measurement process, the ultrasound pulse travels a predefined distance through the fluid from where the ultrasound pulse is transmitted to where the ultrasound pulse is received, whereby a time of flight of the ultrasound pulse from when the ultrasound pulse is transmitted to when the ultrasound pulse is received indicates the viscosity of the fluid.

In another aspect, a method of measuring viscosity of a process fluid in an industrial process comprises, from a first ultrasound transducer contained in a viscometer enclosure mounted on a process vessel containing the process fluid, transmitting a pulse of ultrasound through the process fluid. At a second ultrasound transducer contained in the viscometer enclosure, said pulse of ultrasound is received after said pulse of ultrasound passes through the process fluid. An elapsed time between said transmitting and said receiving is determined. Based on the determined elapsed time, a viscosity of the process fluid is determined.

Other aspects will be in part apparent and in part pointed out hereinafter.

### BRIEF DESCRIPTION OF THE DRAWINGS

FIG. 1 is a schematic diagram illustrating an industrial process control system in accordance with the present disclosure;
FIG. 2 is a cross section of a reactor vessel of the industrial process control system of FIG. 1;
FIG. 3 is a cross-sectional perspective of the reactor vessel;
FIG. 4 is a perspective of an in-line viscometer in accordance with the present disclosure;
FIG. 5 is an exploded perspective of the in-line viscometer;
FIG. 6 is an elevation of the in-line viscometer;
FIG. 7 is a cross section taken in the plane of line 7-7 of FIG. 6; and
FIG. 8 is a flow chart illustrating a method of in-line viscosity measurement in accordance with the present disclosure.

Corresponding parts are given corresponding reference characters throughout the drawings.

### DETAILED DESCRIPTION

This disclosure generally pertains to a viscometer that uses an ultrasound-based time-of-flight measurement process to measure fluid viscosity. In exemplary embodiments, the viscometer is "contactless" in the sense that all electrically active components such as ultrasound transducers are completely isolated from the fluid subject to measurement. In certain embodiments, this disclosure provides an in-line viscometer that uses ultrasound to continuously monitor the viscosity of a process fluid. As will be explained in further detail below, the viscometer of the present disclosure employs a fully sealed viscometer enclosure that, in some embodiments, mounts on a process vessel for in-line viscosity measurement. The viscometer enclosure contains one or more ultrasound transducers in a space that is sealed off from the fluid yet still allows the transmission of an ultrasonic pulse into the fluid. The viscometer of the present disclosure is able to measure the time of flight of ultrasonic pulses transmitted through the fluid and thereby make measurements of fluid viscosity. The sealed, leak-free viscometer enclosure prevents direct fluid contact with the ultrasound transducers, thereby eliminating the need for cleaning. Further, the stable piezoelectric crystals which may be used for the ultrasound transducers never require mechanical recalibration such that maintenance of the viscometer is kept to a minimum.

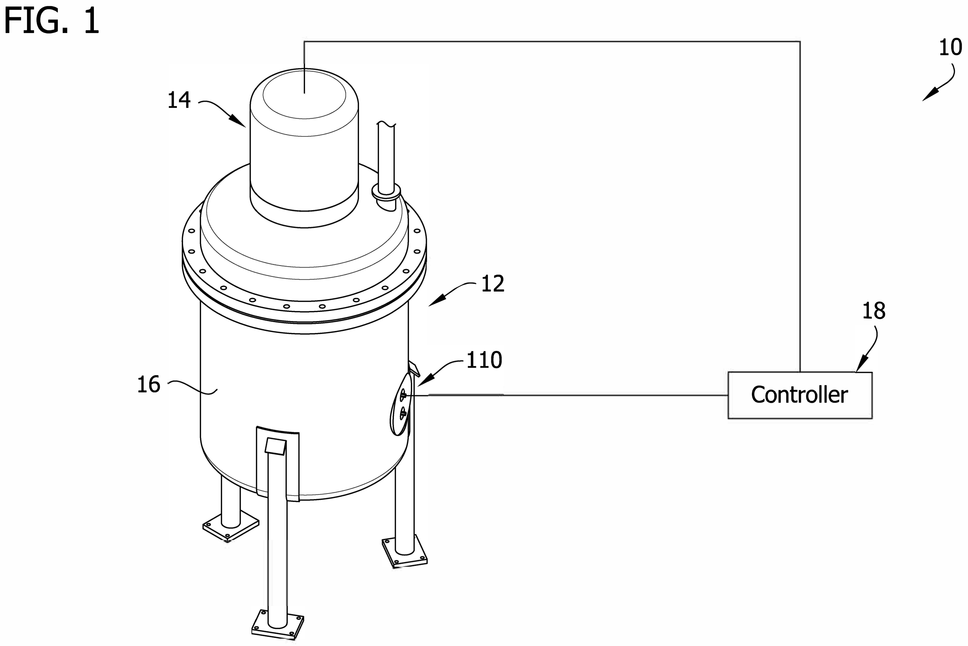

Referring now to FIG. 1, an example industrial process control system employing a viscometer in accordance with the present disclosure is generally indicated at reference number 10. The details of the industrial process control system 10 depicted in FIG. 1 are provided by way of example only. Aspects of the present disclosure can be applied to any industrial process control system for processing a process fluid that flows in a process vessel (e.g., a reactor vessel, reservoir, a pipe, etc.), and for which in-line viscosity measurement is desired.

In general, the industrial process control system 10 comprises a process vessel 12 for containing a process fluid (which typically flows within the process vessel) and a process control device 14 (e.g., an actuator) that is selectively actuatable to adjust a characteristic of the process fluid. Typically, the process control device 14 has the capacity to adjust the viscosity of the process fluid. The process vessel 12 comprises a vessel wall 16 defining a process opening, and an in-line viscometer 110 in accordance with the present disclosure is mounted on the vessel wall 16 at the process opening. In the illustrated embodiment, the process control device 14 and the viscometer 110 are installed on the same process vessel 12. It will be understood, however, that the process control device could be installed upstream or downstream of the process vessel in which the in-line viscometer is installed without departing from the scope of the disclosure. The illustrated industrial process control system 10 further comprises a controller 18 configured to receive a measurement signal from the in-line viscometer 110 and actuate the process control device 14 based on the measurement signal, e.g., to control the viscosity of the process fluid. It will be understood that the controller 18 could be further configured to control other process control devices within the industrial process and/or receive other measurement inputs for controlling various process control devices.

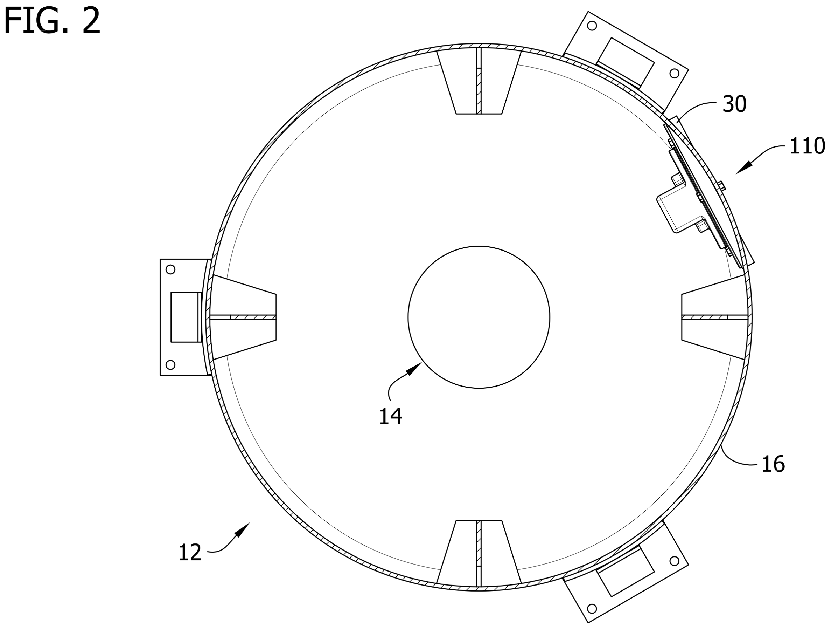

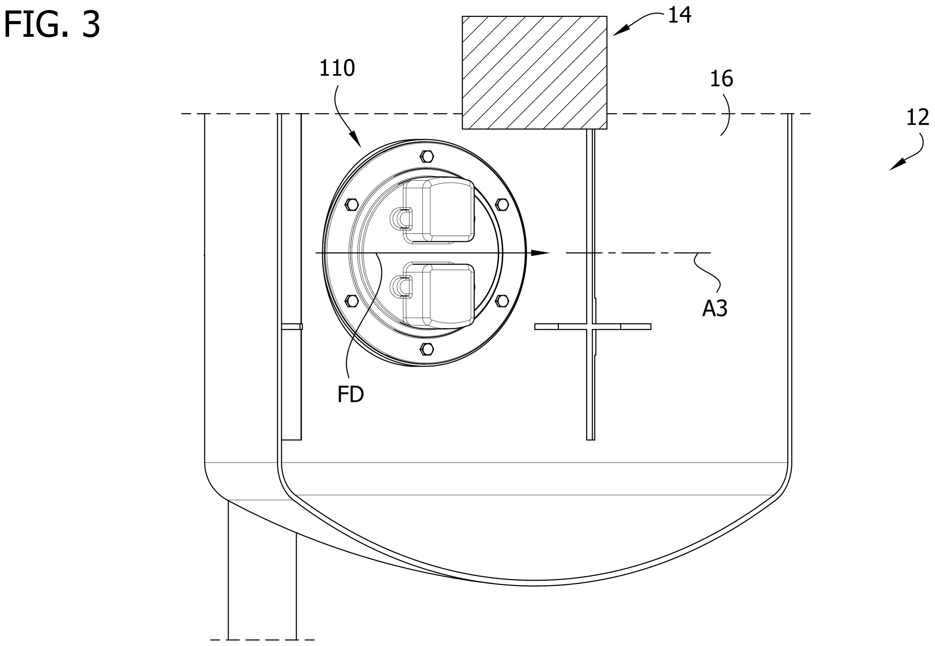

Referring to FIGS. 2 and 3, in the illustrated embodiment, the process vessel 12 is a reactor vessel, and the process control device 14 is an agitator (shown schematically) configured to agitate the process fluid contained within the reactor vessel. In the illustrated embodiment, the reactor vessel 12 has a bottom end portion and a top end portion and the agitator 14 is installed in the bottom end portion of the reactor vessel. The vessel wall 16 on which the in-line viscometer 110 is mounted is a cylindrical wall that extends vertically from the bottom end portion to the top end portion of the reactor vessel 12. The vessel wall 16 comprises an integrated instrument fitting 30 (FIG. 2) that circumscribes the process opening. As will be explained in further detail below, the in-line viscometer 110 is mounted on the instrument fitting 30 such that the in-line viscometer seals the process opening. In the illustrated embodiment, the in-line viscometer 110 is positioned on the lower half of the vessel 16, closer to the agitator 14 than the opposite end portion of the reactor vessel. It will be understood, however, that the in-line viscometer 110 could be installed at other locations along the vessel wall 16 without departing from the scope of the disclosure. In addition, certain process vessels could be fitted with a plurality of in-line viscometers at spaced apart locations along the vessel wall.

The illustrated reactor vessel 12 is suitable for industrial processes related to the production of paint. Those familiar with field of paint production will appreciate that viscosity can be an important process fluid parameter that bears on a paint product's application consistency, color uniformity, stability, and curing profile. Further, controlling the viscosity in a paint production process can improve process efficiency by optimizing for the capabilities of the pumps, mixers, and other equipment used in the industrial process.

While FIG. 1 depicts a reactor vessel 12 of the type that may be suitable for use in a paint production process, other embodiments of industrial process control systems in the scope of the present disclosure can employ other types of process vessels. For instance, other process vessels in the scope of the present disclosure include other reactor vessels, tanks, pipes, and the like. Similarly, industrial process control systems in the scope of the present disclosure can utilize various process control devices to make adjustments to the process fluid in response to viscosity measurements from the in-line viscometer 110. Examples of process control devices in the scope of the present disclosure include a mixer, an agitator, a heater, a chiller, a pump, a valve, a compressor, and a dryer.

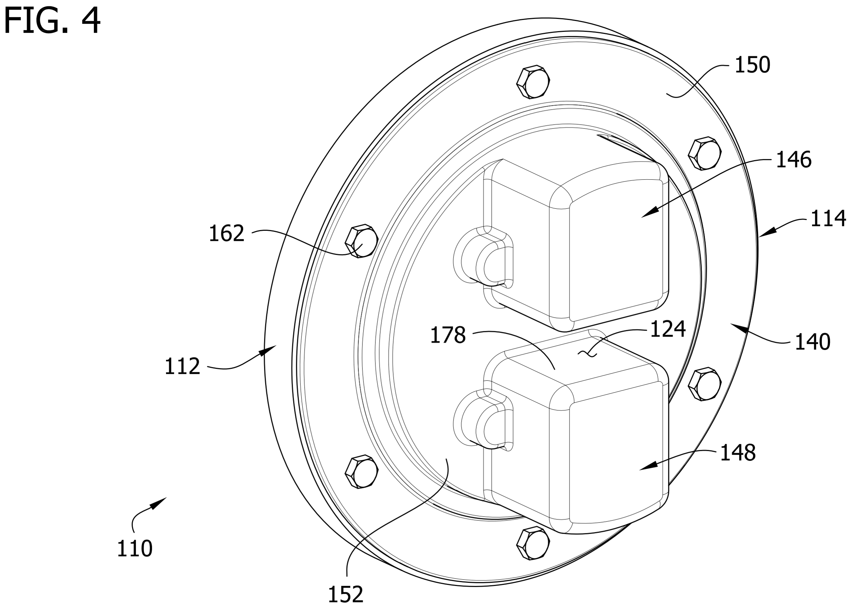

Referring now to FIGS. 4 to 7, an exemplary embodiment of the in-line viscometer 110 is shown in greater detail. The viscometer 110 broadly comprises a mounting plate 112, a viscometer enclosure 114, first and second ultrasound transducers 116, 118, and a transducer clamp 120. The mounting plate 112 and the viscometer enclosure 114 are configured to mount the in-line viscometer on the reactor vessel 12 so that the ultrasound transducers 116, 118 are fluidly isolated from the process fluid. The viscometer enclosure 114 is shaped and arranged to define a measurement channel 124 that receives process fluid contained in the reactor vessel 12. As will be explained in further detail below, the transducer clamp 120 is configured to retain the ultrasound transducers 116, 118 in the viscometer enclosure 114 so that the first ultrasound transducer 116 can transmit an ultrasound pulse into the measurement channel 124 and the second ultrasound transducer 118 can detect the ultrasound pulse after traveling through the process fluid contained in the measurement channel. The time of flight of the ultrasound pulse across the measurement channel 124 from the first ultrasound transducer 116 to the second ultrasound transducer 118 is related to the viscosity of the fluid, and thus, forms the basis for a viscosity measurement.

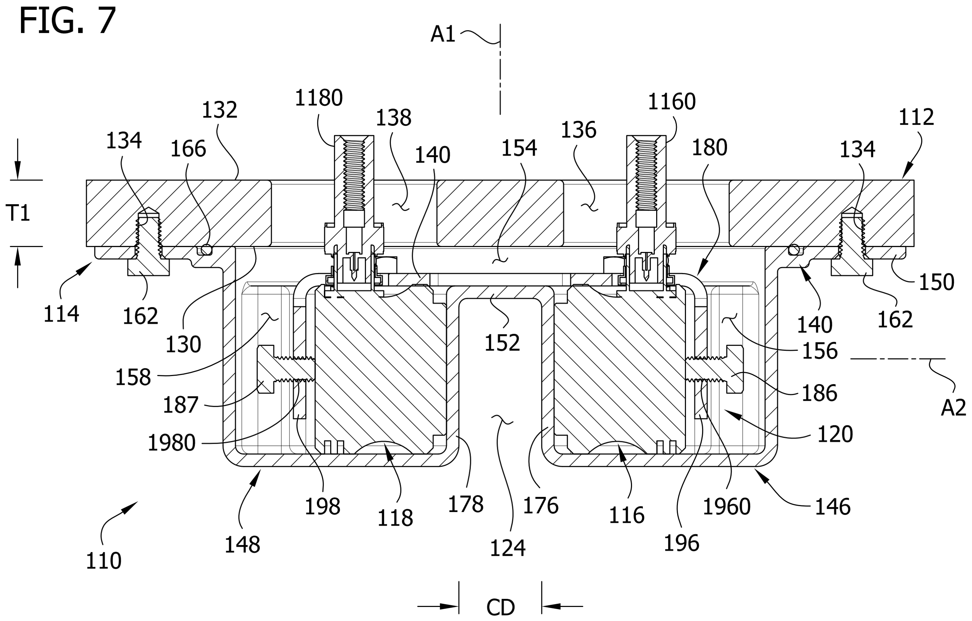

Referring to FIG. 7, the viscometer mounting plate 112 is generally configured for mounting the in-line viscometer 110 on the vessel wall 16 such that the viscometer seals the process opening. The viscometer mounting plate 120 has an inner face 130, an outer face 132, and a thickness T1 extending from the inner face to the outer face. A plurality of threaded openings 134 are formed in the inner face 130 of the mounting plate 112 but do not extend through the entire thickness T1 to the outer face 132. As explained in further detail below, the threaded openings 134 are used for mounting the viscometer enclosure 114 on the inner face 130 to form a liquid-tight seal between the viscometer enclosure and the mounting plate 112.

In the illustrated embodiment, the mounting plate 112 is configured to seat on the instrument fitting 30 of the vessel wall 16 such that the viscometer mounting plate 120 generally covers the process opening. To both mount the mounting plate 112 on the vessel wall 16 and seal the interface between the mounting plate and the vessel wall, a continuous weld is formed between the instrument fitting 30 and the mounting plate around the perimeter of the mounting plate. Hence, the mounting plate 112 is broadly configured to be sealingly joined to the reactor vessel 12 (broadly, process vessel). It will be understood that forming a continuous weld is but one possible way of sealingly joining the mounting plate 112 to the vessel wall 16, and that other ways may also be employed without departing from the scope of the disclosure.

In one or more embodiments, the viscometer mounting plate 112 is a disc-shaped metal plate. Suitably, the viscometer mounting plate 112 can define at least one central access opening 136, 138 for providing access to portions of the transducers 116, 118 received in the viscometer enclosure 114. In the illustrated embodiment, the viscometer mounting plate 112 comprises a first opening 136 exposing portions of the first transducer 116 and a second opening 138 exposing portions of the second transducer 118. After the in-line viscometer 110 is installed, a technician can access the ultrasound transducers 116, 118 from outside the reactor vessel 12 through the openings 136, 138 for performing certain types of maintenance, e.g., fixing an electrical wire connection. Thus, the mounting plate 112 can suitably comprise at least one access opening 136, 138 through which portions of each of the first ultrasound transducer 116 and the second ultrasound transducer 118 are accessible from outside the reactor vessel 12.

Referring again to FIGS. 4 to 7, the viscometer enclosure 114 is generally configured to be mounted on the mounting plate 112 and to contain the ultrasound transducers 116, 118 in the reactor vessel 112 such that the ultrasound transducers can measure the viscosity of the process fluid without contacting the process fluid. Hence, the viscometer enclosure 114 is leak-proof such that the first and second ultrasound transducers 116, 118 are fluidly isolated from the process fluid. The viscometer enclosure 114 has an axis A1 (FIG. 7) and a proximal end portion and a distal end portion spaced apart along the axis. The proximal end portion is configured for engaging the mounting plate 112, and the distal end portion is configured for being located inboard of the vessel wall 16 (where it is immersed in the process fluid) when the in-line viscometer 110 is installed.

The illustrated viscometer enclosure 114 broadly comprises a base 140 that forms the proximal end portion and first and second transducer receptacles 146, 148 that form the distal end portion. As will be explained in further detail below, the base 140 is configured to be fastened to the mounting plate 112 to mount the viscometer enclosure 114 on the reactor vessel 12. The first and second transducer receptacles 146, 148 extend from the base 140 such that the first and second transducer receptacles are configured to be received in the process fluid when the base 140 is mounted on the reactor vessel 12. The first and second transducer receptacles 146, 148 are spaced apart along the base such that the measurement channel 124 is defined between them. The first ultrasound transducer 116 is received in the first transducer receptacle 146 and configured to transmit ultrasound through the measurement channel 124 to the second transducer receptacle. The second ultrasound transducer 118 is received in the second transducer receptacle 148 and configured to receive the ultrasound transmitted by the first ultrasound transducer through the measurement channel 124 and output a measurement signal indicating the viscosity of the process fluid.

The base 140 of the viscometer enclosure 114 is broadly configured to be fastened to the mounting plate 112 and to support the first and second transducer receptacles 146, 148 in the process fluid. In the illustrated embodiment, the base 140 has a top-hat shape including a flange 150 at the proximal end of the base and a receptacle support wall 152 spaced apart from the flange 150 along the axis A1 at the distal end of the base. Both the flange 150 and the receptacle support wall 152 are generally disc-shaped in the illustrated embodiment. The flange 150 has a larger outer dimension than the support wall 152. Also, the flange 150 is an annular body that circumscribes a proximal opening 154 into the interior of the viscometer enclosure 114. The ultrasound transducers 116, 118 and the transducer clamp 120 are installed in the viscometer enclosure 114 through the proximal opening 154, as will be explained in further detail below.

The receptacle support wall 152 supports the first and second transducer receptacles 146, 148 on the base 140. In the illustrated embodiment, the first and second transducer receptacles 146, 148 are cantilevered from the receptacle support wall 152 at spaced apart locations along a spacing axis A2 transverse (e.g., perpendicular) to the axis A1 of the viscometer enclosure 114. In one or more embodiments, the first and second transducer receptacles 146, 148 are integrally formed from a single monolithic piece of material with the base 140 (e.g., the entire viscometer enclosure 114 can be formed from a single piece of machined metal, such as for example stainless steel). The receptacle support wall 152 defines a first opening 156 into the first transducer receptacle 146 and a second opening 158 into the second transducer receptacle 148. The openings 156, 158 are spaced apart along the spacing axis A2 and are sized to accept the respective ultrasound transducers 116, 118 and portions of the transducer clamp 120 into the transducer receptacles 146, 148, as will be explained in further detail below.

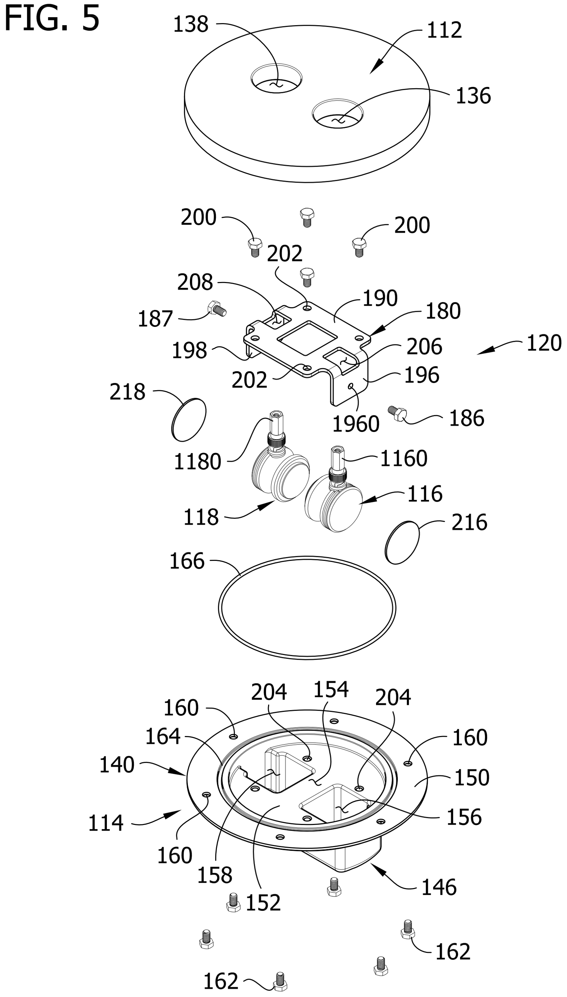

The flange 150 is broadly configured to be fastened to the mounting plate 112 to mount the viscometer enclosure 114 on the reactor vessel 12. In the illustrated embodiment, the flange 150 defines a plurality of fastener openings 160 (FIG. 5) at circumferentially spaced apart locations about the axis A1. The size of the flange 150 corresponds to the size of the mounting plate 112. The fastener openings 160 are shaped and arranged to align with the threaded openings 134 in the mounting plate 112 such that threaded fasteners 162 may be inserted through the fastener openings 160 of the viscometer enclosure 114 and threaded into the threaded openings in the mounting plate to fasten the viscometer enclosure to the mounting plate.

The flange 150 of the base 140 is further configured for making a fluid-tight seal of the interface between the mounting plate 112 and the viscometer enclosure 114. In the illustrated embodiment, the proximal end face of the flange 150 defines an annular O-ring groove 164 (FIG. 5) for retaining an O-ring seal 166. The O-ring groove 164 is radially spaced between the proximal opening 154 and the fastener openings 160 and circumscribes the proximal opening. The O-ring seal 166 retained in the O-ring groove 164 is configured to be compressed between the base 140 (specifically, the flange 150) and the mounting plate 112 to form a liquid-tight seal for inhibiting leakage of process fluid into the viscometer enclosure 114. More particularly, the O-ring seal 166 inhibits leakage of process fluid into the proximal opening 154 through the interface between the viscometer enclosure 114 and the mounting plate 112.

In general, each of the first and second transducer receptacles 146, 148 is sized and arranged to hold a single ultrasound transducer 116, 118 such that the operative end of the ultrasound transducer faces the measurement channel 124. In the illustrated embodiment, the first transducer receptacle 146 comprises a first channel wall 176 and the second transducer receptacle 148 comprises a second channel wall 178 spaced apart from the first channel wall in opposing relation therewith. The first and second channel walls 176, 178 define the measurement channel 124 therebetween. In the illustrated embodiment, each of the channel walls 176, 178 is substantially planar, but the channel walls could have other shapes without departing from the scope of the disclosure.

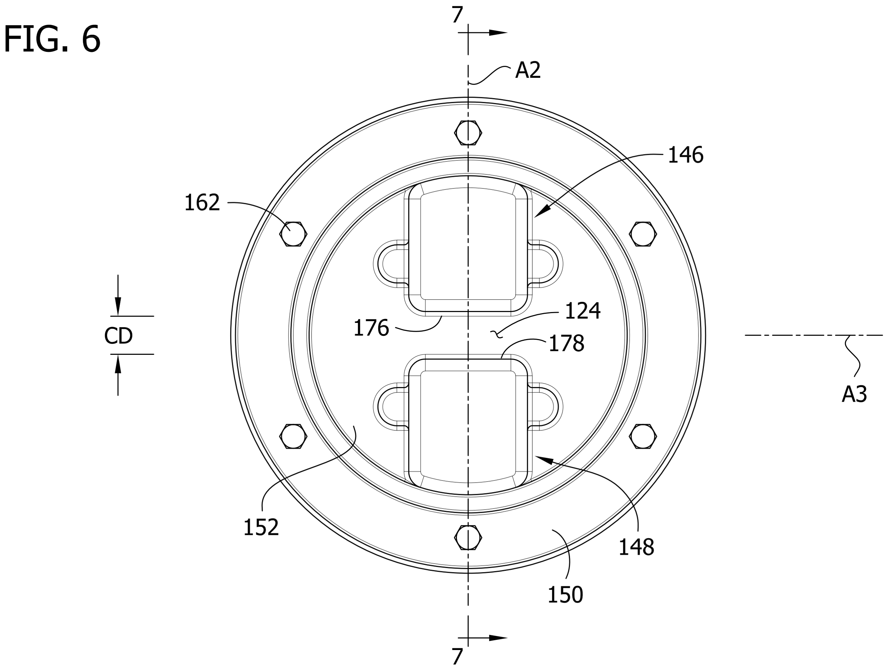

The viscometer enclosure 114 is shaped and arranged to receive the process fluid in the measurement channel 124 between the transducer receptacles 146, 148 when the base 140 is mounted on the reactor vessel 16. In the illustrated embodiment, the first and second transducer receptacles 146, 148 are shaped and arranged so that the measurement channel 124 extends generally along a flow axis A3 (FIG. 6) that is transverse (e.g., perpendicular) to the axes A1, A2. The first channel wall 176 and the second channel wall 178 are separated by a predefined distance CD along the spacing axis A2. In one or more embodiments, the predefined distance CD is in an inclusive range of from 5 mm to 100 mm. The specific predefined distance CD chosen for a given in-line viscometer will vary depending on the type of ultrasound transducers used, the mechanical properties of the viscometer enclosure, and the type of process fluid being measured.

The measurement channel 124 has opposite first and second ends spaced apart along the flow axis A3. In use, the in-line viscometer 110 can suitably be mounted on a process vessel like the reactor vessel 12 so that the flow axis A3 extends generally parallel with a flow direction of process fluid in the vessel. For example, as shown in FIG. 3, the agitator 14 is configured to direct process fluid to flow (e.g., swirl) in the reactor vessel 12 in the direction of arrow FD. The in-line viscometer 110 is installed on the vessel wall 16 so that the flow axis A3 extends parallel to the flow direction FD of process fluid in the reactor vessel 12 adjacent the process opening where the in-line viscometer is installed. Hence, whenever the agitator 14 is operating, process fluid flowing in the flow direction FD will flow into the first end of the measurement channel 124 (which forms an inlet), through the measurement channel along the flow axis A3, and out the second end of the measurement channel (which forms an outlet). The flow-through configuration of the measurement channel 124 ensures that viscosity measurements made by the in-line viscometer 110 reflect the real-time properties of the process fluid as it is being processed - not the stale properties of still process fluid that might otherwise settle in a reservoir that does not have a flow-through configuration.

Referring to FIGS. 5 and 7, the transducer clamp 120 is configured for retaining the first ultrasound transducer 116 and the second ultrasound transducer 118 in the first transducer receptacle 148 and the second transducer receptacle 146, respectively. More specifically, the clamp 120 is configured to press the first ultrasound transducer 116 against the first channel wall 176 and the second ultrasound transducer 118 against the second channel wall 178. Other embodiments can utilize other fixtures for securing a first ultrasound transducer in a first transducer receptacle against a first channel wall and a second ultrasound transducer in a second transducer receptacle against a second channel wall.

Each ultrasound transducer 116, 118 has a respective electrical connector 1160, 1180 that extends proximally along the axis A1 in relation to the remainder of the transducer. In the illustrated embodiment, each electrical connector 1160, 1180 protrudes proximally of the proximal end of the viscometer enclosure 114. Further, each electrical connector 1160, 1180 in the illustrated embodiment protrudes proximally through the openings 136, 138 of the mounting plate 112 beyond the proximal face of the mounting plate. During use, when the in-line viscometer 110 is installed on the reactor vessel 12, the electrical connectors 1160, 1180 can be accessed from outside the reactor vessel, e.g., to perform maintenance on the wire connections to the electrical connectors.

The clamp 120 is broadly configured for retaining the first and second ultrasound transducers 116, 118 in the viscometer enclosure 114 such that the operative side of each transducer is pressed tightly against the inside face of the respective channel wall 176, 178. In the illustrated embodiment, the clamp 120 comprises a retention plate 180 and first and second threaded clamping fasteners 186, 188 threadably engaged with the retention plate for pressing the first and second ultrasound transducers 116, 118 toward the first and second channel walls 176, 178, respectively. The illustrated retention plate 180 is formed into a U-shaped body made up of a central web 190 for fastening to the viscometer enclosure 114 and first and second transducer flanges 196, 198 for threadably receiving the clamping fasteners 186, 188.

The central web 190 is configured to be fastened to the base 140 of the viscometer enclosure 114. More specifically, the central web 190 is configured to seat on the proximal face of the receptacle support wall 152 and be fastened to the receptacle support wall via threaded fasteners 200. In the illustrated embodiment, the central web 190 defines a plurality of fastener openings 202 (FIG. 5) that align with threaded openings 204 formed in the proximal face of the receptacle support wall 152. The threaded fasteners 200 are inserted through the fastener openings 202 and threaded into the threaded openings 204 to fasten the retention plate 180 onto the viscometer enclosure 114.

The central web 190 has a first end portion and a second end portion spaced apart along the spacing axis A2 of the viscometer enclosure 114. The first transducer flange 196 extends distally along the axis A1 from the first end portion of the central web 190 into the first transducer receptacle 146 alongside the first ultrasound transducer 116 (on the opposite side of the ultrasound transducer from the first channel wall 176). The second transducer flange 198 extends distally along the axis A1 from the second end portion of the central web 190 into the second transducer receptacle 148 alongside the second ultrasound transducer 118 (on the opposite side of the ultrasound transducer from the second channel wall 178). The central web 190 defines at least one opening 206, 208 through which the first and second electrical connectors 1160, 1180 can protrude. In the illustrated embodiment, the central web 190 defines a first opening 206 for the first electrical connector 1160 adjacent the first transducer flange 196 and a second opening 208 for the second electrical connector 1180 adjacent the second transducer flange 198.

The first clamping fastener 186 is threadably engaged with the first flange 196 of the retention plate 180 for pressing the first ultrasound transducer 116 toward the first channel wall 176, and the second clamping fastener 188 is threadably engaged with the second flange 198 for pressing the second ultrasound transducer 118 toward the second channel wall 178. Each of the first and second transducer flanges 196, 198 defines a respective threaded opening 1960, 1980 in which the respective clamping fastener 186, 188 is threadably received. In use, the clamping fasteners 186, 188 are tightened in the threaded openings 1960, 1980 to press the ultrasound transducers against the respective channel walls. The illustrated embodiment comprises first and second load plates 216, 218 positioned between the first and second flanges 196, 198 and the first and second ultrasound transducers 116, 118, respectively. When the clamping fasteners 186, 188 are tightened to clamp the ultrasound transducers 116, 118 against the channel walls 176, 178, the load plates 216, 218 spread the load from the clamping fasteners 186, 188 across the respective ultrasound transducers.

It will be noted that each transducer receptacle 146, 148 provides sufficient space outboard of the respective transducer 116, 118 for accessing the clamping fasteners 186, 188 during assembly. To install the transducers 116, 118 in the viscometer enclosure 114, a manufacturer simply places the ultrasound transducers into the transducer receptacles 146, 148, positions the load plates 216, 218 in the transducer receptacles alongside the ultrasound transducers, positions the retention plate 180 on the viscometer enclosure 114 so that the flanges 196, 198 are located alongside the load plates, fastens the retention plate to the base 140 of the viscometer enclosure (via threaded fasteners 200), and installs the clamping fasteners 186, 188 to clamp the ultrasound transducers against the channel walls 176, 178. To install the viscometer 110 in the reactor vessel 12, the manufacturer welds the mounting plate 112 to the instrument fitting 30. Then from inside the vessel, the manufacturer fastens the viscometer enclosure 114 (preassembled with the ultrasound transducers 116, 118 and clamp 120) onto the mounting plate 112. Subsequently, the in-line viscometer 110 can be communicatively connected to a process control system 10 from outside the reactor vessel 12 by connecting wires of the process control system to the connectors 1160, 1180.

During use, the first and second ultrasound transducers 116, 118 are received in the first and second transducer receptacles 146, 148 for measuring the time of flight of ultrasound pulses transmitted across the measurement channel 124 along the spacing axis A2. In other words, the ultrasound transducers 116, 118 are configured to use ultrasound that travels crosswise of the flow direction FD of process fluid through the measurement channel 124 along the flow axis A3. The first ultrasound transducer 116 is received in the first transducer receptacle 146 and configured to transmit ultrasound along spacing axis A2 through the measurement channel 124 to the second transducer receptacle 148. The second ultrasound transducer 118 is received in the second transducer receptacle 148 and configured to receive the ultrasound transmitted by the first ultrasound transducer through the measurement channel 124. At least the second ultrasound transducer 118 is further configured to output a measurement signal indicating the viscosity of the process fluid. For example, the measurement signal output by the second ultrasound transducer 118 may include an indication of the time of flight of the pulse of ultrasound through the process fluid contained in measurement channel 124.

Various types of ultrasound transducers can be used for the first and second ultrasound transducers 116, 118 without departing from the scope of the disclosure. Suitably, each ultrasound transducer 116, 118 comprises a piezoelectric crystal (e.g., a lead zirconate titanate crystal) and an electrode. In the illustrated embodiment, the first and second ultrasound transducers 116, 118 are identical. As is known by those skilled in the art, to transmit an ultrasound pulse from the first ultrasound transducer 116, the electrode supplies a pulse of electrical current to the crystal, which causes the crystal to vibrate at an ultrasonic frequency that is an immutable property of the crystal. The vibrations are transmitted through the first channel wall 176 and the process fluid to the second channel wall 178. The vibrations at the second 178 channel wall are picked up by the piezoelectric crystal of the second ultrasound transducer 118, which generates electrical current in response. The current generated by the crystal in the second ultrasound transducer 118 is used as the measurement signal from which fluid viscosity is derived.

The time of flight of an ultrasound pulse through a predefined and mechanically fixed predefined distance CD of known type of process fluid has an empirically observable relationship with viscosity. Thus, through empirical testing or modeling of different types of process fluid, a correlation between ultrasound time of flight and viscosity can be derived. In use, the process control system 10 is calibrated based on a predetermined correlation so that it may measure the viscosity of the process fluid based on the output signal from the in-line viscometer indicating time of flight of an ultrasound pulse.

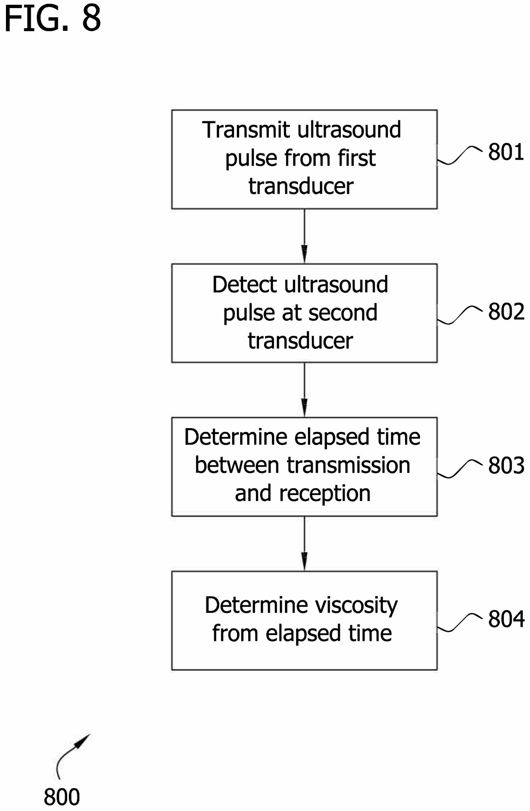

Referring now to FIG. 8, an exemplary method of in-line viscosity measurement in accordance with the present disclosure is generally indicated at reference number 800. The method 800 is performed after the in-line viscometer 110 is installed in a process vessel such as the reactor vessel 12 and connected to a process controller 18. In certain industrial process control systems 10, the method 800 is carried out repetitively, e.g., on a time-incremented basis, each time a viscosity measurement is desired. The method 800 begins at step 801, where the first ultrasound transducer 116 transmits a pulse of ultrasound through the process fluid in the measurement channel 124. At step 802, the second ultrasound transducer 118 receives the pulse of ultrasound (e.g., is vibrated by the ultrasound pulse) after it has passed through the process fluid in the measurement channel 124. As explained above, this causes the second ultrasound transducer 118 to output a current. At step, 803 the current output by the ultrasound transducer 118 is used to determine the elapsed time between steps 801 and 802. Depending on the control architecture in the process control system 10, this step 803 can be performed by a local processor associated with the in-line viscometer 110, by a processor of a field transmitter (not shown) in the process control system 10, or by a supervisory process controller 18 of the process control system. Based on the determined elapsed time, a processor (which could be a local processor associated with the in-line viscometer 110, a processor of a field transmitter, or a supervisory process controller 18) determines the viscosity of the process fluid in step 804.

Accordingly, those skilled in the art will now appreciate that the present disclosure provides a low-maintenance viscometer that enables in-line viscosity measurements in various types of industrial process control systems. The in-line viscometer according to the present disclosure mounts on a process vessel and is immersed in flowing process fluid, yet the active components of the viscometer-the ultrasound transducers-are fully sealed off from the process fluid by the viscometer enclosure. By providing a robust way of mechanically mounting ultrasound transducers on a process vessel so that each ultrasound pulse travels a fixed predefined distance through the process fluid before being detected, calibration of the in-line viscometer is simplified and good measurement accuracy is achieved. Further, by measuring viscosity as a function of time of flight of ultrasound pulses transmitted and received by stable piezoelectric crystals that are fully sealed off from the process fluid environment, time-consuming off-line maintenance tasks such as cleaning and recalibration are substantially eliminated.

Further, though this disclosure has heretofore focused primarily on one particular implementation of a viscometer, it will be understood that the principles of the disclosure can be extended to other implementations. While the viscometer 110 described above is well-suited for in-line viscosity measurement, it will be understood that the principles of this disclosure could be adapted to off-line measurement as well. For example, this disclosure provides a contactless viscometer that may be used in an in-line or off-line measurement context by providing a viscometer enclosure that receives one or more ultrasound transducers that conduct an ultrasound-based time-of-flight measurement process. Provided that the viscometer enclosure sealingly contains the ultrasound transducer(s) so that they do not directly contact the fluid subject to viscosity measurement, viscometer enclosures in accordance with the present disclosure are thought to provide an improvement over prior art viscosity measuring devices by substantially reducing the need for cleaning, recalibration, and other maintenance.

This disclosure also permits variation in the arrangement of ultrasound transducers that may be contained in the fluidly sealed viscometer enclosure. It is expressly contemplated that a viscometer enclosure in accordance with the present disclosure can contain only a single ultrasound transducer or can contain more than two ultrasound transducers.

In the case of a viscometer comprising a viscometer enclosure for containing only a single ultrasound transducer, the viscometer would further comprise an ultrasound reflector (e.g., a metal plate) spaced apart from the ultrasound transducer by a half-flight distance equal to about one-half the specified predefined distance for an ultrasound pulse to travel through the fluid subject to measurement. In these single-transducer embodiments, the sole transducer is configured to emit the pulse of ultrasound toward the ultrasound reflector so that that the ultrasound pulse travels through the fluid toward the reflector, reflects off of the reflector, travels back through the fluid from the reflector to the ultrasound transducer, and is received by the ultrasound transducer, which causes the sole ultrasound transducer to output a voltage from which time of flight, and hence viscosity, can be determined.

This disclosure contemplates various embodiments of ultrasound viscometers that employ more than two transducers. For example, in some embodiments, two or more transmission transducers transmit ultrasound pulses (e.g., ultrasound pulses of different frequencies or amplitude) toward a single receiver transducer. The two or more transmission transducers may be received in the same or different transducer receptacles. In other embodiments, a single transmission transducer transmits an ultrasound pulse that is received by two or more receiver transducers. The two or more transmitter transducers may be received in the same or different transducer receptacles. In still other embodiments, the viscometer enclosure may comprise multiple pairs of transducer receptacles, each configured for receiving at least one transmitter transducer and at least one receiver transducer on opposite sides of a respective measurement channel, wherein the various pairs of transducer receptacles are positioned at spaced apart locations along the base of the viscometer enclosure. In yet other embodiments, the viscometer enclosure comprises enlarged transducer receptacles on opposite sides of a single measurement channel such that each transducer receptacle retains a plurality of ultrasound transducers on the respective side of the measurement channel.

Accordingly, it can be seen that this disclosure provides a contactless viscometer for measuring viscosity of a fluid. Exemplary viscometers in accordance with the present disclosure can comprise one or more ultrasound transducers and a viscometer enclosure. The one or more ultrasound transducers is/are configured to conduct an ultrasound-based time-of-flight measurement process in which the one or more ultrasound transducers transmit an ultrasound pulse into the fluid at a first time and receive the ultrasound pulse at a second time. In various embodiments, the viscometer enclosure comprises at least one transducer receptacle configured for being immersed in the fluid, for receiving said one or more ultrasound transducers, and for fluidly isolating said one or more ultrasound transducers from the fluid when the at least one transducer receptacle is immersed in the fluid. The viscometer enclosure is shaped and arranged so that, when said one or more ultrasound transducers received in the at least one transducer receptacle conduct the ultrasound-based time-of-flight measurement process, the ultrasound pulse travels a predefined distance through the fluid from where the ultrasound pulse is transmitted to where the ultrasound pulse is received, whereby a time of flight of the ultrasound pulse from when the ultrasound pulse is transmitted to when the ultrasound pulse is received can be measured and indicates the viscosity of the fluid.

When introducing elements of the present disclosure or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the disclosure are achieved and other advantageous results attained.

As various changes could be made in the above products and methods without departing from the scope of the disclosure, it is intended that all matter contained in the above description shall be interpreted as illustrative and not in a limiting sense.

## Claims

1. An in-line viscometer for measuring viscosity of a process fluid contained in a process vessel, the in-line viscometer comprising:
a viscometer enclosure comprising a base configured to be mounted on the process vessel, the viscometer enclosure further comprising first and second transducer receptacles extending from the base such that the first and second transducer receptacles are configured to be received in the process fluid when the base is mounted on the process vessel, the first transducer receptacle comprising a first channel wall and the second transducer receptacle comprising a second channel wall spaced apart from the first channel wall in opposing relation therewith, the first and second channel walls defining a measurement channel therebetween, the viscometer enclosure being shaped and arranged to receive the process fluid in the measurement channel when the base is mounted on the process vessel;
a first ultrasound transducer received in the first transducer receptacle and configured to transmit ultrasound through the measurement channel to the second transducer receptacle; and
a second ultrasound transducer received in the second transducer receptacle and configured to receive the ultrasound transmitted by the first ultrasound transducer through the measurement channel and output a measurement signal indicating the viscosity of the process fluid.

2. The in-line viscometer of claim 1, wherein the viscometer enclosure is leak-proof such that the first and second ultrasound transducers are fluidly isolated from the process fluid.

3. The in-line viscometer of claim 1 or claim 2, comprising a mounting plate sealingly joined to the process vessel, the base of viscometer enclosure being configured to be fastened to the mounting plate to mount the viscometer enclosure on the process vessel.

4. The in-line viscometer of claim 3, comprising an O-ring seal configured to be compressed between the base and the mounting plate to form a liquid-tight seal for inhibiting leakage of process fluid into the viscometer enclosure.

5. The in-line viscometer of claim 3 or claim 4, wherein the mounting plate comprises at least one opening through which portions of each of the first ultrasound transducer and the second ultrasound transducer are accessible from outside the process vessel.

6. The in-line viscometer of any of claims 1 to 5, wherein the first channel wall and the second channel wall are separated by a predefined distance, and wherein the predefined distance is in an inclusive range of from 5 mm to 100 mm.

7. The in-line viscometer of any of claims 1 to 6, comprising a clamp configured for retaining the first ultrasound transducer and the second ultrasound transducer in the first transducer receptacle and the second transducer receptacle respectively.

8. The in-line viscometer of claim 7, wherein the clamp is configured to press the first ultrasound transducer against the first channel wall and the second ultrasound transducer against the second channel wall.

9. The in-line viscometer of claim 8, wherein the clamp comprises a retention plate fastened to the base, a first clamping fastener threadably engaged with the retention plate for pressing the first ultrasound transducer toward the first channel wall, and a second clamping fastener threadably engaged with the retention plate for pressing the second ultrasound transducer toward the second channel wall.

10. The in-line viscometer of claim 9, wherein the retention plate comprises a central web having a first end portion and a second end portion, a first transducer flange extending from the first end portion, and a second transducer flange extending from the second end portion, the central web being fastened to the base, the first transducer flange being received in in the first transducer receptacle alongside the first ultrasound transducer, the second transducer flange being received in the second transducer receptacle alongside the second ultrasound transducer, the first clamping fastener being threadably engaged with the first transducer flange, and the second clamping fastener being threadably engaged with the second transducer flange.

11. The in-line viscometer of claim 10, wherein the first ultrasound transducer comprises a first connector, the second ultrasound transducer comprises a second connector, and the central web defines at least one opening through which the first and second connectors protrude.

12. The in-line viscometer of any of claims 1 to 11, wherein the base of the viscometer enclosure comprises a receptacle support wall, the first and second transducer receptacles being supported on the receptacle support wall, the receptacle support wall defining a first opening into the first transducer receptacle and a second opening into the second transducer receptacle.

13. A reactor for an industrial process control system, the reactor comprising:
a process vessel;
an agitator in the process vessel;
a viscometer mounting plate sealingly mounted on the process vessel; and
the in-line viscometer of any of claims 1 to 12 mounted on the viscometer mounting plate.

14. An industrial process control system comprising:
a process vessel for containing a process fluid flowing within the process vessel, the process vessel comprising a vessel wall defining a process opening;
a process control device, the process control device being selectively actuatable to adjust a characteristic of the process fluid;
an in-line viscometer mounted on the vessel wall at the process opening, the in-line viscometer comprising a viscometer enclosure and first and second ultrasound transducers in the viscometer enclosure, the first ultrasound transducer being configured to transmit ultrasound through the process fluid to the second ultrasound transducer, the second ultrasound transducer being configured to detect the ultrasound transmitted from the first ultrasound transducer through the process fluid and output a measurement signal indicating the viscosity of the process fluid, the viscometer enclosure being configured to fluidly isolate the first and second ultrasonic transducers from the process fluid; and
a controller configured to receive the measurement signal from the in-line viscometer and actuate the process control device based on the measurement signal.

15. A viscometer for measuring viscosity of a fluid, the viscometer comprising:
one or more ultrasound transducers configured to conduct an ultrasound-based time-of-flight measurement process in which said one or more ultrasound transducers are configured to transmit an ultrasound pulse into the fluid at a first time and receive the ultrasound pulse at a second time; and
a viscometer enclosure comprising at least one transducer receptacle configured for being immersed in the fluid, the at least one transducer receptacle receiving said one or more ultrasound transducers and fluidly isolating said one or more ultrasound transducers from the fluid when the at least one transducer receptacle is immersed in the fluid, the viscometer enclosure being shaped and arranged so that, when said one or more ultrasound transducers received in the at least one transducer receptacle conduct the ultrasound-based time-of-flight measurement process, the ultrasound pulse travels a predefined distance through the fluid from where the ultrasound pulse is transmitted to where the ultrasound pulse is received, whereby a time of flight of the ultrasound pulse from when the ultrasound pulse is transmitted to when the ultrasound pulse is received indicates the viscosity of the fluid.
